Europäisches Patentamt

European Patent Office

Office européen des brevets

(19)

(11) Publication number: **0 333 109**
A1

## (12) EUROPEAN PATENT APPLICATION

(21) Application number: **89104437.2**

(22) Date of filing: **13.03.89**

(51) Int. Cl.⁴: **A01B 73/04**

(30) Priority: **15.03.88 IT 4570988**

(43) Date of publication of application:
**20.09.89 Bulletin 89/38**

(84) Designated Contracting States:
**AT BE CH DE ES FR GB GR IT LI LU NL SE**

(71) Applicant: **MASCHIO S.P.A.**
**Via Marcello, 41**
**I-35011 Campodarsego Padova(IT)**

(72) Inventor: **Panizzolo, Fabrizio**
**Via Cortivo, 18**
**I-35100 Padova(IT)**

(74) Representative: **Piovesana, Paolo**
**Corso del Popolo, 70**
**I-30172 Venezia-Mestre(IT)**

(54) **Farm machine for tilling land.**

(57) An agricultural machine comprises two or more operation-performing machine (cutters, rotary harrows, stalk shredders ect.) which are connected to a tractor by a main frame (16) acting as a support for two secondary frames (47,48 and 49,50) each rigid with one operation-performing machine. Motion is transmitted from a tractor power take-off, driving one or more pulleys (32,33) rigid with a central primary shaft (31). From this, motion is transmitted to two or more secondary pulleys (37,38), each arranged to drive one operation-performing machine by means of a belt (34,36). By means of a hydraulic system (56,61), each operation-performing machine can be swivelled about the swivel axis of its secondary frame, and hence raised with the result that the overall machine becomes reduced in size, for its transportation along a road.

FIG.1

This invention relates to an agricultural machine for soil working, comprising at least two operation-performing machines each consisting of a structure supporting a plurality of soil working implements, main means for connecting said operation-performing machines to said main means, and transmission means, said transmissions means being arranged to transmit motion from a tractor power take-off to said operation-performing machines.

Whenever large soil surfaces are to be worked, a number of agricultural machines (harrows, cutters, stalk shredders, ect.) are coupled together so as to cover a wider strip of soil with a single passage.

Although this has the advantage of a saving in the time and cost of the operation, it results in a series of problems.

An agricultural machine is known consisting of two rotary harrows which are connected to the tractor power take-off by a first branch running to a central transfer case from which two side branches extend, each in the form of a cardan shaft driving the respective operation-performing machine.

In this described machine, because of its intrinsic design it is necessary to break the transmission connection between the tractor power take-off and the transmission system driving each of the two operation-performing machines every time the overall size of the machine is to be reduced to enable it to be transported along a road.

This limitation on the machine performance is to the presence in the transmission linkage of a universal joint which receives motion from the central transfer case and transmits it to each of the two operation-performing machines.

Again because of its intrinsic design, the operation-performing machines pertaining to the described agricultural machine are not able to adapt to wide variations in the slope of the terrain.

The technical problem to be solved by the machine according to the invention is to enable the two or more operation-performing machines pertaining to the agricultural machine to automatically rise, ie to adapt to variations in the level of the terrain, without the operator having to carry out special manoeuvres.

This problem is solved by the machine according to the invention, which is characterized in that said transmission means consist of a plurality of motion transmission members, said members being arranged to act along substantially parallel axes such as to enable said operation-performing machines to be swivelled about an axis of said secondary connection means.

A further problem which it is the object of the machine according to the invention to solve is to enable the two or more operation-performing machines to be swivelled without having to break the motion transmission linkage connection when the machine width has to be reduced for road traffic requirements.

This problem is solved by the agricultural machine according to the invention, which is characterised by lifting means, said lifting means being arranged to swivel said operation-performing machines about said axis of said secondary connection means, said transmission means being operative both during the active stage of said machine and during the raising of said operation-performing machines, so making breakage of the linkage connection of said transmission members unnecessary.

These and further characteristics will be more apparent from the description given hereinafter with reference to the accompanying drawings in which:

Figure 1 is a perspective view of the machine;

Figure 2 is a front view of said machine;

Figure 3 is a plan view of said machine;

Figure 4 is a front view of the machine according to the invention, with the two operation-performing machines raised for its transportation along a road;

Figure 5 shows a diagrammatic configuration of two operation-performing machines adapting to irregularities of the soil;

Figure 6 shows a diagrammatic configuration of three operation-performing machines adapting to irregularities of the soil.

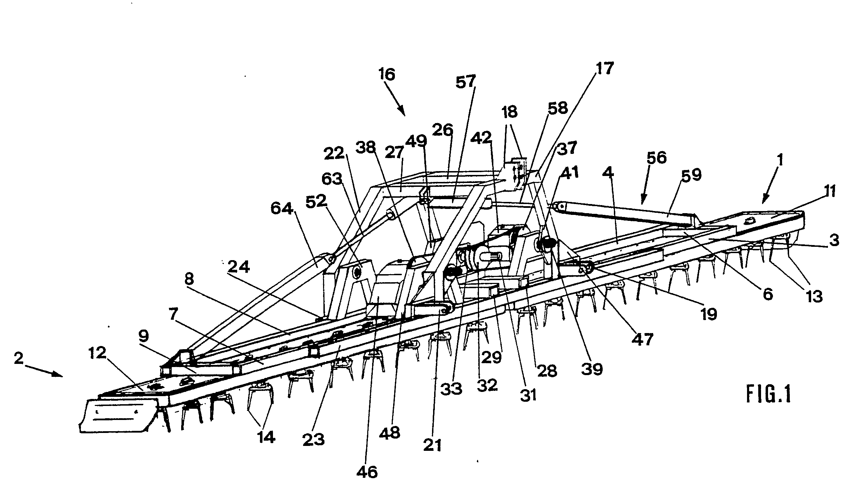

The machine according to the invention comprises two harrows 1, 2 (Figure 1), each of which consists of a load-bearing structure formed from section bars 3, 4, 6 in the case of the harrow 1 and section bars 7, 8, 9 in the case of the harrows 2. The section bars 3, 4, 6 and 7, 8, 9 respectively are welded together and fixed in known manner to two load-bearing covers 11, 12 for the two harrows respectively.

The complete structure acts in known manner as a support for a plurality of implements 13 and 14 for the harrows 1 and 2 respectively, said implements being suitable for working the soil.

The machine is connected to a tractor, not shown in the figures, by main connection means in the form of a frame 16, which represents the main means of connection to the tractor and consists of a front element, ie closer to the tractor and indicated by 17, to which there are fixed the three connectors 18, 19, 21 of a three-point connection system. The frame also comprises a rear element 22, together with a front section bar 23, a rear section bar 24, two upper section bars 26, 27 and two lower section bars 28, 29 which give the frame 16 the necessary rigidity.

Motion is transmitted from the tractor power take-off to a central shaft 31 on which there are fixed two pulleys 32, 33 engaged with two belts 34, 36 respectively, each of which is engaged with a pulley 37, 38 pertaining to the harrow 1, 2 respectively.

The pulley 37 rotates about a fixed pin 39, which is housed at its front in a support 41 welded to the front element 17.

Motion is transmitted in known manner from the pulley 37 to a transfer case 42 coaxial to the pulley 37. Motion is transmitted from this case to the implements 13 of the harrow 1.

The pin 39 represents the pivot about which the harrow 1 is arranged to swivel, as will be more apparent hereinafter. The pulley 38 is arranged to rotate about a fixed pin 43 housed at its front in a support 44 welded to the front element 17. Motion is transmitted in known manner from the pulley 38 to a transfer case 46 coaxial with the pulley.

Motion is transmitted in known manner from this case to the implements 14 of the harrow 2.

A ploughshare 54 is arranged to operate in the space between the harrow 1 and the harrow 2.

The frames 47, 49 and the frames 48, 52 of the harrow 1 and harrow 2 respectively form the secondary means for connecting said harrows to the frame 16.

The pulleys 32, 37 and the pulleys 33, 38 together with the respective transfer cases represent in their turn the transmission means for transmitting motion from the central shaft 31 to the respective implements 13, 14.

The motion transmission members of the machine according to the invention are represented by the pulleys 32, 37 and belt 34, and by the pulleys 33, 38 and belt 36.

The central shaft 31 is parallel to the axial development of the pins 39, 51 pertaining to the harrow 1, and is also parallel to the axial development of the pins 43, 53 of the harrow 2.

With the harrow 1 there cooperate lifting means 56 consisting of a hydraulic system comprising a piston, not shown in the figures, which slides within a cylinder 57 swivel-mounted at its upper end on the section bar 27, the piston in the cylinder 57 being fixed to a rod 58 swivel-mounted on a section bar 59 which is fixed at its lower end to the section bar 6.

Likewise, with the harrow 2 there cooperate lifting means 61 consisting of a hydraulic system comprising a piston which slides within a cylinder 62 swivel-mounted at its upper end on the section bar 26, the piston in the cylinder 62 being fixed to a rod 63 swivel-mounted on a section bar 64 which is fixed at its lower end to the section bar 9.

The pistons which slide within the cylinders 57, 62 can be single or double acting.

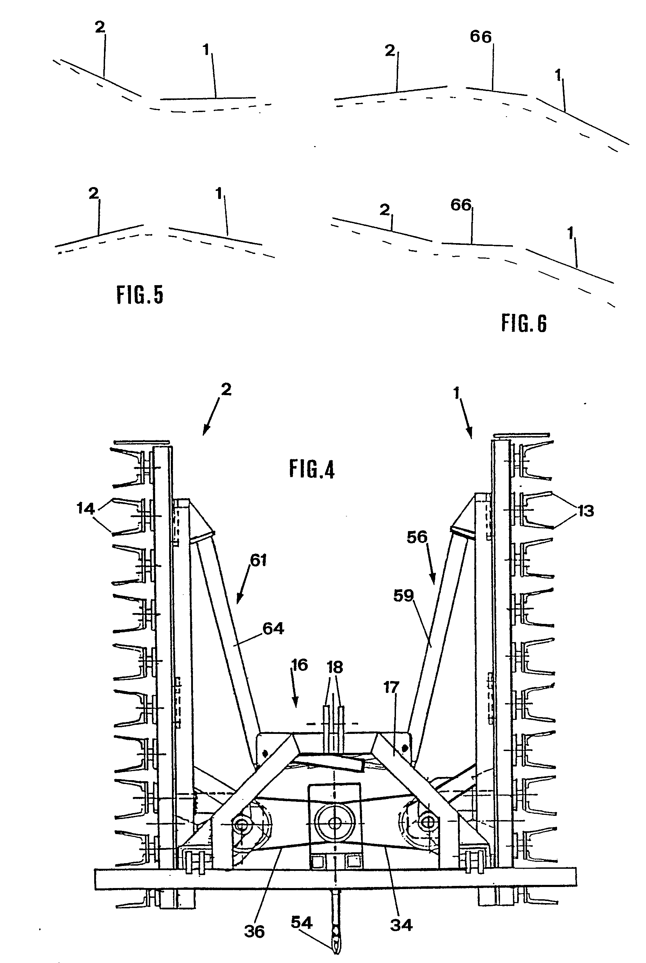

The machine according to the invention can comprise two harrows 1, 2 which, when working the soil, can adapt to the different slopes of the ground as in Figure 5, which shows in diagrammatic from the possibility of following the shape of a depression or hump in the ground.

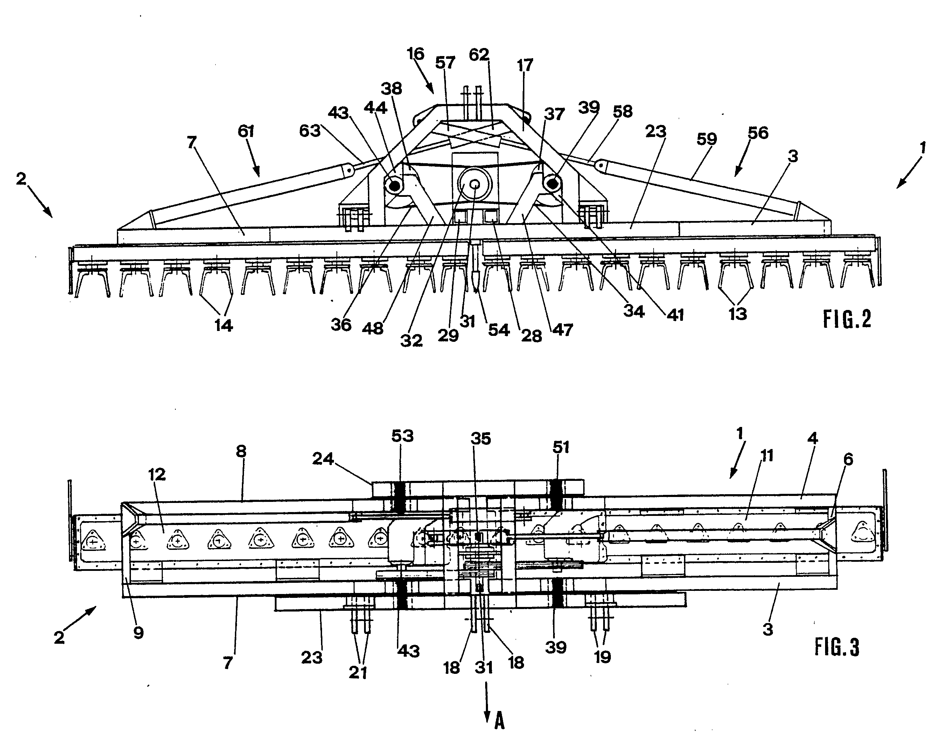

The machine can however comprise three harrows (or cutters, stalk shredders etc.), of which the central one 66 (Figure 6) is mounted to the rear of the two main ones 1, 2 and is connected in known manner to a portion 35 (Figure 3) of the central shaft 31.

The operation-performing machine 66 is of smaller dimensions than the two machines 1, 2 to make the machine according to the invention more flexible in adapting to variations in the level of the ground, as shown in the diagrammatic representations of Figure 6.

The machine according to the invention operates as follows.

If the pistons sliding in the cylinders 57, 62 are operated single-acting, when the tractor pulls the machine in the direction of the arrow A of Figure 3 the two harrows 1, 2 advance and by virtue of their weight adapt to the level of the ground by swivelling about the pivots represented by the pins 39, 51 in the case of the harrow 1 and the pins 43, 53 in the case of the harrow 2.

The harrows 1, 2 are able to swivel about their respective pivots by a considerable amount, in contrast to the situation if motion were transmitted from the central shaft 31 to the transfer cases 42, 44 by universal joints, which allow only a few degrees of swivel.

If the ground is substantially flat and any slight depressions or humps in the ground need to be eliminated, the pistons in the cylinders 57, 62 are operated double-acting.

The harrows 1, 2 (Figure 2) are thus locked in the horizontal position, and the implements 13, 14 of the respective harrows 1, 2 tend to level the ground as they rotate.

When the machine according to the invention is to the transported along a road the hydraulic system forming the lifting means 56, 61 for the harrows 1 and 2 respectively is operated.

The two cylinders 57, 62 (Figure 2) retract to swivel the harrow 1 about the fulcrum represented by the pins 39, 51 (Figure 3), and swivel the harrow 2 about the fulcrum represented by the pins 43, 53, until the two harrows 1, 2 assume the substantially vertical position shown in Figure 4.

During this swivelling of the two harrows 1, 2 and after they have attained the vertical configuration, the motion transmission linkages to the implements 13, 14 remain intact, with the advantage that when the two harrows are returned to their working position it is not necessary to reconnect these linkages as they did not require to be broken in order to raise the harrows.

As stated, the operation-performing machines pertaining to the machine according to the invention can be of various types such as rotary harrows, cutters, stalk shredders, etc., to take advantage of the fact that provided a sufficiently powered tractor is available, the concept of arranging a number of such operation-performing machines side by side makes the working of the soil more economical.

Finally, arranging two main operation-performing machines to the sides of a third such machine positioned between but to the rear of the two main machines enables any ground irregularity to be followed with greater flexibility.

## Claims

1. An agricultural machine for soil working, comprising at least two operation-performing machines each consisting of a structure supporting a plurality of soil working implements, main means for connecting said machine to a tractor, secondary means for connecting said operation-performing machines to said main means, and transmission means, said transmission means being arranged to transmit motion from a tractor power take-off to said operation-performing machines, characterised in that said transmission means (31, 32, 33, 37, 38) consist of a plurality of motion transmission members, said members being arranged to act along substantially parallel axes such as to enable said operation-performing machines (1,2) to swivel about an axis (39, 51 and 43, 53) of said secondary connection means (47, 49 and 48, 52).

2. A machine as claimed in claim 1, characterised by lifting means (56,61), said lifting means being arranged to swivel operation-performing machines (1,2) about said axis (39,51 and 43,53) of said secondary connection means (47, 49 and 48, 52), said transmission means (31, 32; 33, 37, 38) being operative both during the active stage of said machine and during the raising of said operation-performing machines (1,2), so making breakage of the linkage connection of said transmission members unnecessary.

3. An agricultural machine as claimed in claim 2, characterised by means (57,58), said means being arranged to lock said machines (1,2) in a substantially horizontal position over the soil while said machines are working on the soil, in order to level small variations in soil level.

4. An agricultural machine as claimed in claim 1, characterised by three operation-performing machines (1,2,66), the third of said machines being in a position central to but rearward of the first two, means (35) being provided to drive the implements of said third machine.

5. An agricultural machine as claimed in claim 1, characterised by three operation-performing machines (1,2,66) the third of said machines being in a position central to but rearward of the first two, means (35) being provided to drive the implements of said third machine.

6. An agricultural machine as claimed in claim 1, characterised by means (39, 43, 51, 53) for connecting said main means (16) to said secondary means (47, 48, 49, 52), said secondary means being rigid with said operation-performing machines (1,2) and being arranged to swivel about said main means (16) to adapt the position of said machines (1,2) to irregularities in the soil.

7. An agricultural machine as claimed in claim 1, characterised by means (39, 43, 51, 53) for connecting said main means (16) to said secondary means (47, 48, 59, 52), said secondary means being rigid with said operation-performing machines (1,2) and being arranged to swivel about said main means (16) in order to raise said operation-performing machines (1,2) and so reduce the transverse dimensions of said machine when transporting said machine along a road.

FIG.1

FIG.2

FIG.3

FIG.5

FIG.6

FIG.4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4 ) |
|---|---|---|---|
| X | FR-A-2097023 (FIRMA AMAZONEN-WERKE H. DREYER) <br> * the whole document * | 1, 2, 3, 6, 7 | A01B73/04 |
| X | FR-A-2169144 (VAN DER LELY N.V.) <br> * page 4, line 7 - line 26; figures 2, 3, 4 * | 1, 2, 3, 6, 7 | |
| X | DE-A-3628605 (FELLA-WERKE GMBH) <br> * column 4, line 40 - column 5, line 44; figures 2, 3 * | 1, 2, 7 | |
| P | DE-C-3635985 (SIRCH) <br> * figure 1 * | 1, 4, 7 | |

| | |
|---|---|
| | TECHNICAL FIELDS SEARCHED (Int. Cl.4 ) |
| | A01B |

The present search report has been drawn up for all claims

| Place of search | Date of completion of the search | Examiner |
|---|---|---|
| THE HAGUE | 31 MAY 1989 | VERDOODT S. |